# EUROPEAN PATENT APPLICATION

(11) **EP 2 717 448 A1**
(43) Date of publication of application: **09.04.2014**
(21) Application number: 12187194.1
(22) Date of filing: 04.10.2012
(51) Int. Cl.: H02M 3/335, H02M 3/337

(54) **Push-Pull switch mode power supply of forward type with two semi-independenly regulated outputs**

(71) Applicant: Vestel Elektronik Sanayi ve Ticaret A.S., 45030 Manisa (TR)
(72) Inventor: Kirisken, Barbaros, 45030 Manisa (TR); Cesmeci, Mete, 45030 Manisa (TR)
(74) Representative: Cayli, Hülya

(57) **Abstract**

Proposed is a switch mode power supply, which can regulate two outputs (V1, V2) simultaneously by controlling energy flow to two secondary windings (S1, S2) of a transformer (T), which are preferably wounded in reverse direction with respect to each other, by controlling the switching means (Q1, Q2) semi-dependently. Hence, the proposed power supply provides multiple regulated outputs (V1, V2) using a known structure of switch mode power supplies. A controller (C) for controlling the operation of said power supply is also provided.

## Description

### Technical Field

The present invention is related to switch mode power supplies and controllers for said power supplies.

### Prior Art

Switch mode power supplies are widely used in modern electronic devices. This type of power supplies can supply medium to high power outputs and can be constructed in small sizes compared to linear supplies. Furthermore, these supplies can be designed to have plurality of isolated outputs. Due to the stated advantages, half bridge and full bridge supplies are especially used in consumer electronic devices.

Switch mode power supplies employ at least two switching devices (i.e. MOSFET), one of which is coupled between the positive side of input and one end of primary winding (or supply inductor). The other switching device is coupled between the negative side of input and the same end of the primary winding. If the power supply is constructed in forward converter topology, the other end of primary winding is connected to a capacitive voltage divider, which generally supplies half of the input voltage to the coil in steady state. If the power supply is constructed in full bridge topology, the second end of the winding is also connected to a switch couple in the same configuration with the other end of the winding. In full bridge converter topology, two switch couples are conversely controlled, i.e. if one switch couple connects the winding to negative side, the other connects the other end to positive side.

Being an isolated power supply, the switch mode power supplies require isolated feedback from the output. Several arrangements are used to obtain output feedback such as opto-coupled voltage feedback, external transformer winding, etc.

No matter which topology is used or which type of output feedback arrangement is used, the switching devices of the supplies, which are known from the prior art, are controlled in accordance with a single voltage and/or current feedback. If multiple outputs from the power supply are required, a feedback path or arrangement is formed between one of the outputs of the power supply and the controller of the power supply. In this case, outputs other than stated feedback output of the supplies are unregulated and fluctuated. The output of unregulated outputs is determined by winding ratios of secondary windings used for unregulated outputs. Unregulated outputs voltage or current may vary in accordance with the load of the output. Furthermore, since these outputs are not monitored, they are fluctuated over an average value and they may generate noises or spikes, which are not compensated by the power supply.

Generally, the most critical output of the power supply is used to obtain a feedback. For instance, if a computer power supply is to be designed, the designer usually chooses 3V3 output as a feedback point since this output is designed to power integrated circuits directly. However, many computer component designers may prefer using 12V outputs to feed components using secondary regulators. In this case, the unregulated or "non-fully-regulated" 12V output may generate stress over secondary regulators, causing their life extent to decrease.

If more than one of the outputs is required to be fully regulated, these feedback systems are inadequate. The power supplies known from the prior art uses an alternative feedback system for multiple regulated outputs in which the outputs are "averaged" to obtain an instantaneous output feedback. However this type of feedback worsens all output regulations since it is inadequate for spike and sinks detections.

Therefore when multiple regulated outputs are required, multiple regulators or supplies are used in the systems of the prior arts. A preferable method is to connect a secondary non-isolated regulator to unregulated output of the power supplies. However, this significantly increases number of components and consequently size and cost of the regulator.

The prior art document US 2010/0097045 A1 discloses a multiple output power supply which can regulate all outputs. The power supply disclosed within the document is of buck converter (non-isolated step down) type and comprises a single coil and a plurality of switches, which are controlled by a controller/driver, and which connect the coil to outputs in accordance with feedback signals. An input switch couple connects the coil either to energy input or ground in order to regulate stored energy on the coil. The power supply of US 2010/0097045 A1 reduces number of components for multiple regulated outputs. However, the system disclosed herewith is not applicable to an isolated power supply. Therefore, a system to obtain multiple regulated and isolated outputs is required.

### Brief Description of the Invention

The present invention provides a switch mode power supply comprising at least one transformer comprising at least one primary winding, at least one first secondary winding and at least one second secondary winding; at least a first output which is arranged to be supplied from the first secondary winding; at least a second output which is arranged to be supplied from the second secondary winding; a first switching means which is coupled between a first end of said primary winding and a positive line of an input; a second switching means which is coupled between a first end of said primary winding and a negative line of an input; wherein said power supply is arranged to supply current to said first output while said first switching means is conducting and to supply current to said second output while said second switching means is conducting and in that said power supply further comprises at least a controller; which is connected to at least the first output the second output the first switching means and the second switching means, which drives the first switching means in accordance with a feedback signal fed from the first output and drives a second switching means in accordance with the feedback signal fed from the second output, and which drives first switching means and the second switching means such that the conduction durations of said first switching means and said second switching means are non-intersecting.

With the power supply of the invention, at least two isolated and fully regulated outputs can be provided within the known structure of switch mode power supplies. Therefore, fully regulated outputs are obtained without increasing the number of components and the size of the power supply.

A controller for the power supply of the invention is also provided comprising a PWM generating means, which generates pulse width modulated square waves for driving switching means in accordance with acquired feedback signals from multiple outputs are provided.

### Object of the Invention

The object of the invention is to provide a switch mode power supply which provides multiple isolated and regulated outputs.

Another object of the invention is to provide a switch mode power supply which has reduced number of components.

Another object of the invention is to provide a switch mode power supply which is small in size.

### Description of the Drawings

Figure 1 shows an embodiment of the power supply of the invention.
Figure 2 shows another embodiment of the power supply of the invention.
Figure 3 shows an exemplary block diagram of the controller of the power supply of the invention.

The references in the figures may possess following meanings;

| | |
|---|---|
| Positive line of input | (L) |
| Negative line of input | (N) |
| First switching means | (Q1) |
| Second switching means | (Q2) |
| Third switching means | (Q3) |
| Fourth switching means | (Q4) |
| First capacitor | (C1) |
| Second capacitor | (C2) |
| Transformer | (T) |
| Primary Winding | (P) |
| First end | (P1) |
| Second end | (P2) |
| First secondary winding | (S1) |
| Second secondary winding | (S2) |
| First rectification means | (R1) |
| Second rectification means | (R2) |
| First output | (V1) |
| Second output | (V2) |
| Controller | (C) |
| Signal control unit | (U) |
| First feedback Input | (FB1) |
| Second feedback Input | (FB2) |
| PWM generating means | (OSC) |
| First protection means | (PT1) |
| Second protection means | (PT2) |
| Synchronisation means | (SYNC) |
| High side driving means | (DRVH) |
| Low side driving means | (DRVL) |

### Description of the Invention

Isolated output switch mode power supplies generally use a single voltage and/or current feedback signal to control switching of the power supply. This feedback signal is generally taken from one of the outputs, and stated output is the only output that can be considered as fully regulated. If multiple outputs are provided, the outputs other than the one with the feedback are not fully regulated. If multiple outputs are required to be fully regulated, the supplies known from the prior art is inadequate.

The present invention provides a novel switch mode power supply, which can have multiple fully regulated outputs. The power supply of the invention uses two feedback signals acquired from a first output (V1) and a second output (V2) of the supply, and controls at least a first switching means (Q1) and a second switching means (Q2) semi dependently in accordance with acquired feedback signals.

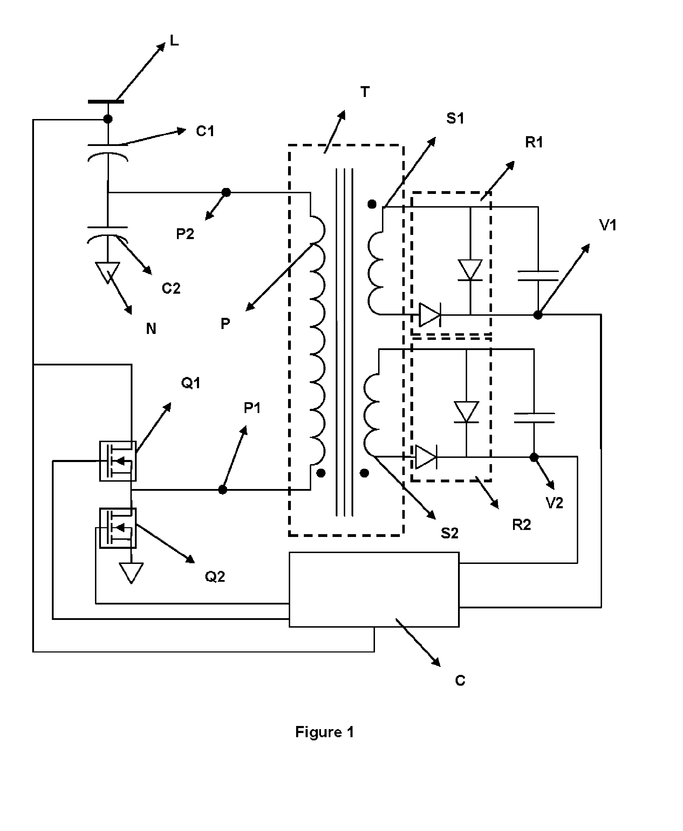

Figure 1 shows an embodiment of the power supply of the present invention. In the stated embodiment, a forward converter topology is used. The power supply comprises a transformer (T) which comprises at least a primary winding (P) and at least two secondary windings (S1, S2).

The primary winding (P) is driven by at least two switching means (Q1, Q2). In the embodiment given in Figure 1, a first switching means (Q1) is coupled to a first end (P1) of the primary winding (P) and a positive line of the input (L). A second switching means (Q2) is coupled to the first end (P1) of the primary winding (P) and negative line of the input (N).

In the embodiment, an exemplary diagram of which is given in Figure 1, the second end (P2) of the primary winding (P) is coupled to a capacitive voltage divider, comprising two preferably equivalent capacitors (C1, C2). The capacitive divider supplies a voltage that is equal to the half of the input voltage in steady state. However as the switching means (Q1, Q2) are switched, the divider conducts current due to voltage changes over primary winding (P).

The power supply comprises at least two outputs (V1, V2). The first output (V1) is arranged to be supplied from the first secondary winding (S1) and the second output (V2) is arranged to be supplied from the second secondary winding (S2). Preferably, the power supply comprises at least a first rectification means (R1), which is connected between the first secondary winding (S1) and the first output (V1), and/or a second rectification means (R2), which is connected between the secondary winding (S2) and the second output (V2).

The power supply of the invention is arranged to supply current at least to the first output (V1) while the first switching means (Q1) is conducting and supply current at least to the second output (V2) while the second switching means (Q2) is conducting. This can be achieved either by winding the secondary windings (S1, S2) in reverse direction with respect to each other, or by arranging two rectifiers (R1, R2) such that two rectifiers (R1, R2) conduct current while respective switching means (Q1, Q2) are conducting. With the stated arrangement of the power supply, the first output (V1) can be controlled by switching durations of the first switching means (0l), and the second output can be controlled by switching durations of the second switching means (Q2).

The power supply of the present invention further comprises a controller (C), which is connected to at least the first output (V1) of the power supply, the second output (V2) of the power supply, the first switching means (Q1) and the second switching means (Q2). The controller (C) drives the first switching means (Q1) in accordance with the feedback signal fed from the first output (V1) and drives the second switching means (Q2) in accordance with the feedback signal fed from the second output (V2). The controller further controls the driving of the first switching means (Q1) and the second switching means (Q2) such that two switching means (Q1, Q2) do not conduct simultaneously. In other words the controller (C) drives two switching means (Q1, Q2) such that their (Q1, Q2) conduction duration do not intersect.

The controller (C) of the power supply of the invention, with the above-mentioned arrangement of outputs (V1, V2), therefore can regulate the first output (V1) by controlling the first switching means (Q1) and can regulate the second output (V2) by controlling the second switching means (Q2). Consequently, two independently regulated outputs (V1, V2) are provided with the power supply of the invention.

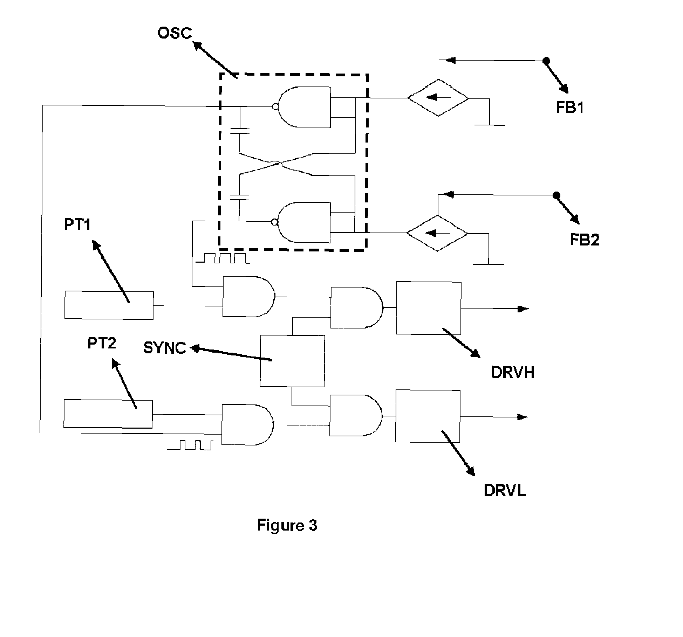

The present invention further provides a controller (C) for switch mode power supplies, an embodiment of which is given in figure 3. Said controller (C) comprises a first feedback input (FB1) and a second feedback input (FB2) which are used to acquire feedback signals from a plurality of outputs of the power supply. The controller (C) further comprises a PWM generating means (OSC) which inputs two feedback signals from first and second feedback inputs (FB1, FB2) and generates two pulse width modulated square waves in accordance with said feedback signals, active durations of which are non-intersecting.

An exemplary structure is given in figure 3 wherein two NAND gates are interconnected with capacitors and feedback currents, which are proportional to the feedback signals, are fed to capacitors in order to charge the capacitors. When one of the capacitors are charged to a predetermined threshold level, it disables corresponding NAND gate and enables the other NAND gate, which also stops capacitor charge and starts the charging of the other capacitor. The increase in a feedback current results in decrease of duty cycle in respective square wave output. Therefore a negative feedback for both square wave outputs is provided and the outputs are controlled semi-dependently.

The controller (C) may further comprise at least one protection means (PT1, PT2) which inhibits pulse width modulated square wave of the PWM generating means (OSC) in accordance with an over voltage and/or an over current detection. The embodiment of the invention herein comprises a first protection means (PT1) which inhibits a first output of the PWM generating means (OSC) in accordance with an over voltage and/or an over current detection on the first output (V1) of the power supply, and a second protection means (PT2) which inhibits a second output of the PWM generating means (OSC) in accordance with an over voltage and/or an over current detection on the second output (V2) of the power supply.

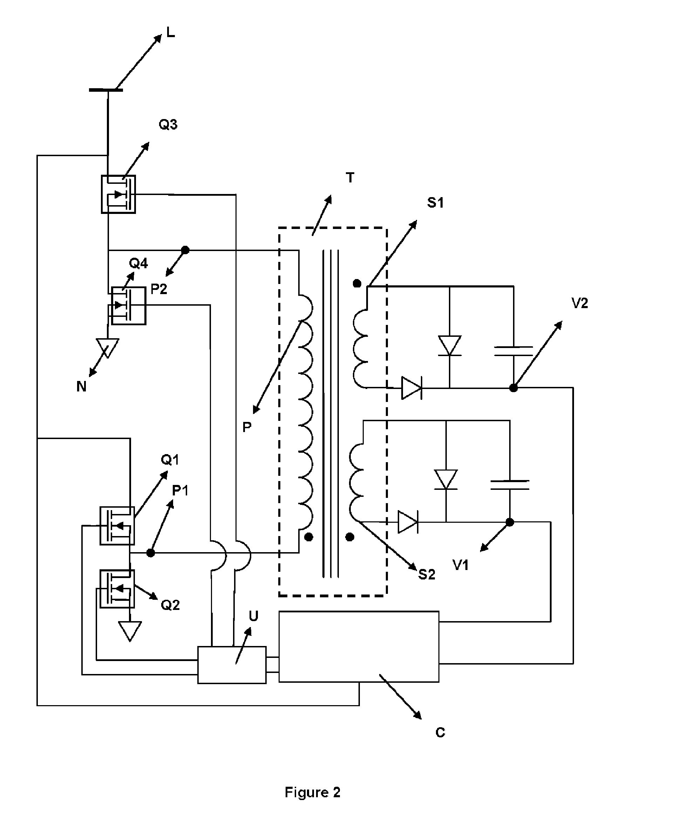

In a preferable embodiment which is given in figure 2, a third switching means (03) and a fourth switching means (04) are coupled to the second end (P2) of the primary winding (P). This configuration is known as "full bridge" and is generally used to drive power supplies with high power outputs. The third switching means (03) is coupled between the second end (P2) of the primary winding (P) and the positive line of the input (L). similarly, the fourth switching means (04) is coupled between the second end (P2) of the primary winding (P) and negative line of the input (N). In this embodiment, power supply further comprises at least one signal control unit (U) in order to fed the PWM signals generated by the controller (C) to the switching means (Q1, 02, 03, A4). Said signal control unit (U) may be a part of said controller (C) as well as being an independent component. Thanks to said signal control unit (U), third switching means (03) is preferably driven in synchronization with the second switching means (02). Furthermore, fourth switching means (04) is preferably driven in synchronization with the first switching means (Q1). Therefore when the first end (P1) of the primary winding (P) is connected one of the lines of the input (L), the second end (P2) of the primary winding (P) is connected to the other line of the input (N).

In a preferable embodiment, the controller (C) may further comprise a synchronisation means (SYNC) which compares pulse width modulated square waves of the PWM generating means (OSC) and inhibits one of the waves when the other wave passes to active state (i.e. drives the respective switching means to a conduction state). The synchronization means (SYNC) is preferable since the PWM generating means (OSC) may generate square waves, active states of which intersect. If stated situation is not prevented, the square waves switch the switching means (Q1, Q2) at the same instant and a short circuit of the input occurs.

The controller (C) may also comprise at least a high side driving means (DRVH) which supplies a driving signal to a first switching means (Q1) in accordance with one of said pulse width modulated square waves. The high side driving means (DRVH) internally may generate a floating driving supply, which is required for high side driving.

The controller (C) may also comprise at least a low side driving means (DRVL) which supplies a driving signal to a second switching means (Q2) in accordance with a second square wave output.

With the power supply of the invention, multiple regulated outputs (V1, V2) are provided within a single isolated power supply.

## Claims

1. A switch mode power supply comprising
- at least one transformer (T) comprising at least one primary winding (P), at least one first secondary winding (S1) and at least one second secondary winding (S2);
- at least a first output (V1) which is arranged to be supplied from the first secondary winding (S1);
- at least a second output (V2) which is arranged to be supplied from the second secondary winding (S2);
- a first switching means (Q1) which is coupled between a first end (P1) of said primary winding (P) and a positive line of an input (L); and
- a second switching means (Q2) which is coupled between a first end (P1)
of said primary winding (P) and a negative line of an input (N) **characterized in that** said power supply is arranged to supply current to said first output (V1) while said first switching means (Q1) is conducting and to supply current to said second output (V2) while said second switching means (Q2) is conducting and **in that** said power supply further comprises at least a controller (C)
- which is connected to at least the first output (V1), the second output (V2), the first switching means (Q1), and the second switching means (Q2),
- which drives the first switching means (Q1) in accordance with a feedback signal fed from the first output (V1) and drives a second switching means (Q2) in accordance with the feedback signal fed from the second output (V2), and
- which drives first switching means (Q1) and the second switching means (Q2) such that the conduction durations of said first switching means (Q1) and said second switching means (Q2) are non-intersecting.

2. A switch mode power supply according to claim 1 wherein said power supply further comprises at least a first rectification means (R1) which is connected between said first secondary winding (S1) and said first output (V1), and/or at least a second rectification means (R2) which is connected between said second secondary winding (S2) and said second output (V2).

3. A switch mode power supply according to claim 1 wherein said first secondary winding (S1) and said second secondary winding (S2) are wound in reverse direction with respect to each other (S1, S2).

4. A switch mode power supply according to claim 2 wherein said first rectification means (R1) and said second rectification means (R2) are arranged such that said first rectification means (R1) conducts while said first switching means (Q1) is conducting, and said second rectification means (R2) conducts while said second switching means (Q2) is conducting.

5. A switch mode power supply according to claim 1 wherein said power supply further comprises a capacitive voltage divider which is coupled to a second end (P2) of the primary winding (P).

6. A switch mode power supply according to claim 1 wherein said power supply further comprises a third switching means (Q3), which is coupled between a second end (P2) of the primary winding (P) and the positive line of the input (L); and a fourth switching means (Q4), which is coupled between said second end (P2) of the primary winding (P) and the negative line of the input (N).

7. A controller (C) for switch mode power supplies, which comprise at least a first output (V1), at least a second output (V2), at least a first switching means (Q1), and at least a second switching means (Q2), **characterized in that** said controller (C) comprises
- at least a first feedback input (FB1) which is used to acquire a first feedback signal from the first output (V1);
- a second feedback input (FB2) which is used to acquire a second feedback signal from said second output (V2); and
- a PWM generating means (OSC) which inputs said feedback signals and generates two pulse width modulated square waves in accordance with said feedback signals, active durations of which are non-intersecting.

8. A controller (C) according to claim 7 wherein said controller (C) further comprises at least one protection means (PT1, PT2) which inhibits pulse width modulated square wave of the PWM generating means (OSC) in accordance with an over voltage and/or an over current detection.

9. A controller (C) according to claim 7 wherein said controller (C) further comprises a synchronisation means (SYNC) which compares said pulse width modulated square waves and inhibits one of the waves when the other wave passes to an active state.

10. A controller (C) according to claim 7 wherein said controller (C) further comprises at least a high side driving means (DRVH) which supplies a driving signal to a first switching means (Q1) in accordance with one of said pulse width modulated square waves.

11. A controller (C) according to claim 7 wherein said controller (C) further comprises at least a low side driving means (DRVL) which supplies a driving signal to a second switching means (Q2) in accordance with one of said pulse width modulated square waves.
